Europäisches Patentamt

**European Patent Office**

Office européen des brevets

(11) Numéro de publication: **0 237 410**
**B1**

(12) FASCICULE DE BREVET EUROPEEN

(45) Date de publication du fascicule du brevet:
**18.07.90**

(21) Numéro de dépôt: **87400448.4**

(22) Date de dépôt: **02.03.87**

(51) Int. Cl.⁵: **H02B 1/26, H02B 1/06**

(54) Coffret de logement d'appareillages électriques.

(30) Priorité: **12.03.86 FR 8603484**

(43) Date de publication de la demande:
**16.09.87 Bulletin 87/38**

(45) Mention de la délivrance du brevet:
**18.07.90 Bulletin 90/29**

(84) Etats contractants désignés:
**BE CH DE GB IT LI**

(56) Documents cités:
**CH-A- 428 890**
**DE-A- 3 016 598**
**FR-A- 2 097 543**

(73) Titulaire: **TELEMECANIQUE, 43-45, Boulevard Franklin Roosevelt, F-92504 Ruell-Malmaison Cedex(FR)**

(72) Inventeur: **LaFosse, Jean, 25, rue de Dame Rose, F-21310 Mirebeau(FR)**
Inventeur: **Schmit, Francis, 23, rue du Docteur Barbier, F-21100 Dijon(FR)**

(74) Mandataire: **Marquer, Francis et al, 35, Avenue Victor Hugo, F-78960 Voisins le Bretonneux(FR)**

ACTORUM AG

**Description**

La présente invention concerne un coffret de logement d'appareillages électriques comprenant une enveloppe métallique formée par un assemblage de plaques de tôle constituant un parallélépipède droit muni en face avant d'une porte pivotante, et un châssis métallique de support des appareillages qui est monté fixement à l'intérieur de l'enveloppe.

Pour ce type de coffret renfermant des appareillages électriques tels que notamment des contacteurs, disjoncteurs, fusibles, etc..., il est connu du brevet FR 2 259 458 de constituer le châssis ou l'ossature de support des appareillages à l'aide des éléments métalliques d'assemblage suivants :
- quatre montants verticaux perforés,
- au moins une paire de traverses latérales s'étendant parallèlement dans un même plan et susceptible d'être fixée à différents niveaux prédéterminés aux montants,
- au moins un rail profilé disposé perpendiculairement aux traverses latérales et dont chaque extrémité est assemblée à la traverse associée au moyen d'une équerre ; le rail comporte une âme qui est bordée d'ailes servant à la fixation par encliquetage des appareillages et qui est dispo sée sur chant en position assemblée du rail et de la traverse associée.

Bien entendu, ce type de châssis est adapté dimensionnellement au coffret et est positionné fixement à l'intérieur de l'enveloppe de manière que les faces avant des appareillages soient en regard de la face avant du coffret.

Selon le brevet précité, l'équerre assurant l'assemblage du rail profilé avec la traverse associée est formée par deux ailes perpendiculaires dont l'une est solidarisée à la traverse par un boulon et dont l'autre est subdivisée en une patte centrale bordée de deux languettes adjacentes décalées de manière à permettre un enfourchement de chant de cette aile sur l'âme du rail. Cette conformation particulière de l'aile de l'équerre enfilée sur l'extrémité du rail est compliquée, difficile à réaliser et présente des risques de fixation insuffisante du rail.

Il est également connu du brevet FR 2 097 543 de doter l'une des ailes d'une équerre d'assemblage, de crochets s'emboîtant dans des perforations d'un flasque latéral ajouré et de solidariser cette aile audit flasque au moyen d'un rivet ; l'autre aile de l'équerre est disposée de chant et est percée d'un taraudage dans lequel s'engage une vis de serrage traversant l'âme du rail profilé afin de solidariser le rail à l'équerre, ledit rail étant éventuellement maintenu par une plaquette percée d'un orifice de passage de la vis. Toutefois, une telle solidarisation du rail avec l'équerre d'assemblage nécessite de perforer l'âme du rail pour permettre le passage de la vis de serrage.

La présente invention a en particulier pour but de remédier à ces inconvénients et de réaliser des éléments métalliques d'assemblage qui permettent un montage simple et rapide et qui assurent une fixation rigide du rail lors de son assemblage à un montant au moyen d'une équerre de connexion, sans nécessiter de perforations du rail pour sa fixation sur l'équerre.

A cet effet, selon l'invention, un coffret de logement d'appareillages électriques conforme au préambule de la revendication 1, est caractérisé en ce que l'âme du rail profilé est solidarisée à la plaque de l'équerre recevant le rail au moyen d'une plaque verticale de bridage qui s'appuie sur l'âme et qui est dotée d'au moins une seconde patte d'accrochage traversant l'orifice et venant s'emboîter dans la seconde perforation du montant.

Suivant une autre caractéristique de l'invention, l'âme du rail est appliquée sur une partie seulement de la plaque de l'équerre recevant le rail, et des moyens de serrage sont prévus pour enserrer l'âme du rail entre la plaque de bridage et la plaque de l'équerre recevant le rail ; avantageusement, ces moyens de serrage comportent une seule vis traversant une ouverture ménagée dans la plaque de bridage et s'engageant dans un taraudage réalisé dans la partie restante de la plaque de l'équerre recevant le rail.

L'invention a également pour but de masquer les bornes des appareillages électriques modulaires dont l'accès est nécessaire en face avant du coffret, empêchant ainsi tout risque de contact direct avec les bornes, et de renforcer la protection générale du matériel installé vis-à-vis d'agents extérieurs nuisibles (corps solides, projection d'eau) tout en permettant de ne pas voir la filerie lors de l'ouverture de la porte du coffret.

A cet effet, selon un autre aspect de l'invention, chaque rail profilé portant ces appareillages est associé à un plastron vertical isolant s'étendant transversalement entre les deux montants en venant se fixer par encliquetage sur ceux-ci et étant pourvu sur sa longueur d'une lumière rectangulaire permettant la venue en saillie des faces avant d'accès des appareillages.

Pour une disposition des rails profilés suivant toute la hauteur de l'enveloppe du coffret, les différents plastrons isolants sont juxtaposés les uns aux autres de manière à reconstituer ensemble la façade avant verticale de l'enveloppe.

D'autre part, pour une disposition des rails profilés suivant une partie seulement de la hauteur de l'enveloppe du coffret, les plastrons isolants mentionnés ci-dessus recouvrent cette partie de la face avant verticale de l'enveloppe, tandis que des caches verticaux isolants s'étendant transversalement entre les deux montants et s'emboîtant mutuellement les uns dans les autres ainsi que dans lesdits plastrons, terminent le recouvrement de la face avant de l'enveloppe.

D'autres et avantages de l'invention apparaîtront mieux dans la description détaillée qui suit et se réfère aux dessins annexés donnés uniquement à titre d'exemple et dans lesquels :

La figure 1 représente une vue partielle en perspective éclatée du coffret de logement d'appareillages électriques conforme à l'invention, montrant la manière d'assembler les divers éléments de construction entre eux ;

La figure 2 représente une vue de dessus en coupe du coffret avec les éléments de la figure 1 montrés en position assemblée ;

La figure 3 représente une vue de côté en coupe du coffret ;

La figure 4 représente une vue de côté d'un plastron isolant ;

La figure 5 représente une vue partielle en coupe selon la ligne V-V de la figure 1 ;

La figure 6 représente une vue partielle en coupe d'un appareillage modulaire dont la partie avant formant étagement est en saillie d'un plastron associé ;

La figure 7 représente une vue de côté d'un bandeau isolant ;

La figure 8 représente la façade avant à plastrons et bandeaux du coffret montré en position ouverte ; et

La figure 9 représente une vue partielle en coupe d'une vis quart de tour encliquetée dans un plastron et servant au démontage de ce dernier.

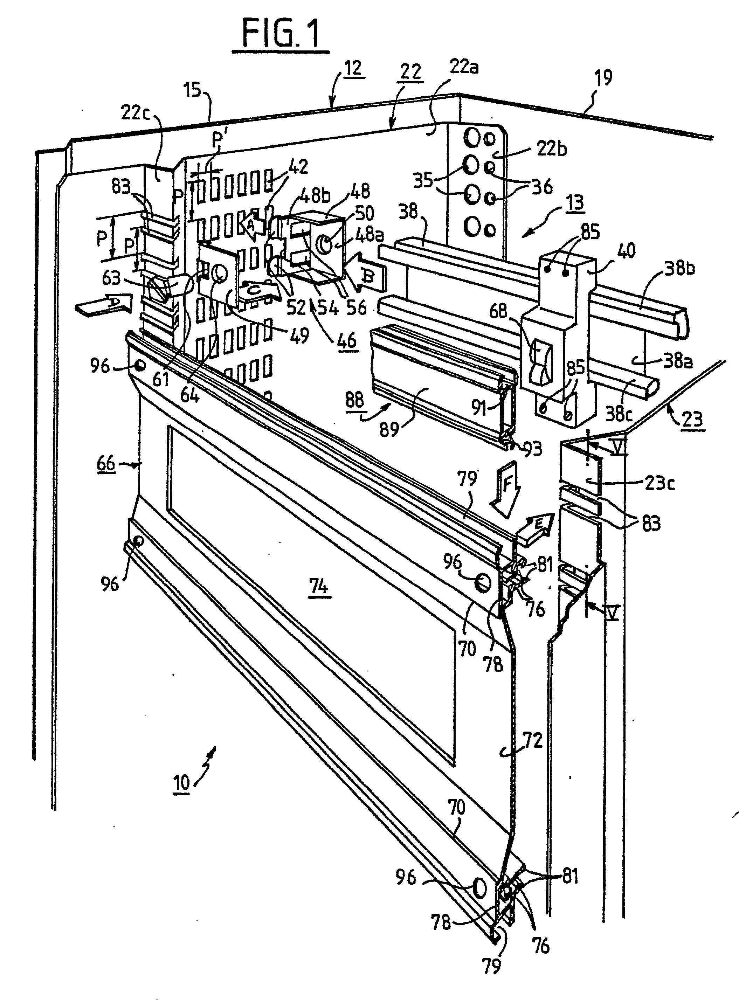

Sur les figures 1 à 3, on a représenté en 10 un coffret de logement d'appareillages électriques, conforme à l'invention, constitué par une enveloppe métallique 12 de forme parallélépipédique contenant un châssis métallique 13 de support des appareillages. Habituellement, ce type de coffret électrique présente des dimensions telles que sa hauteur soit supérieure à sa largeur elle-même supérieure à sa profondeur.

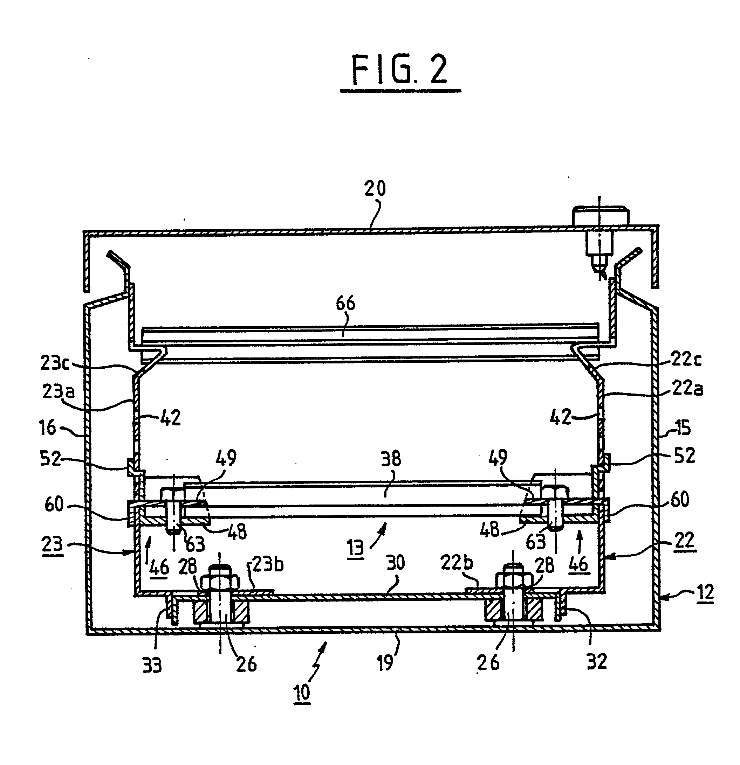

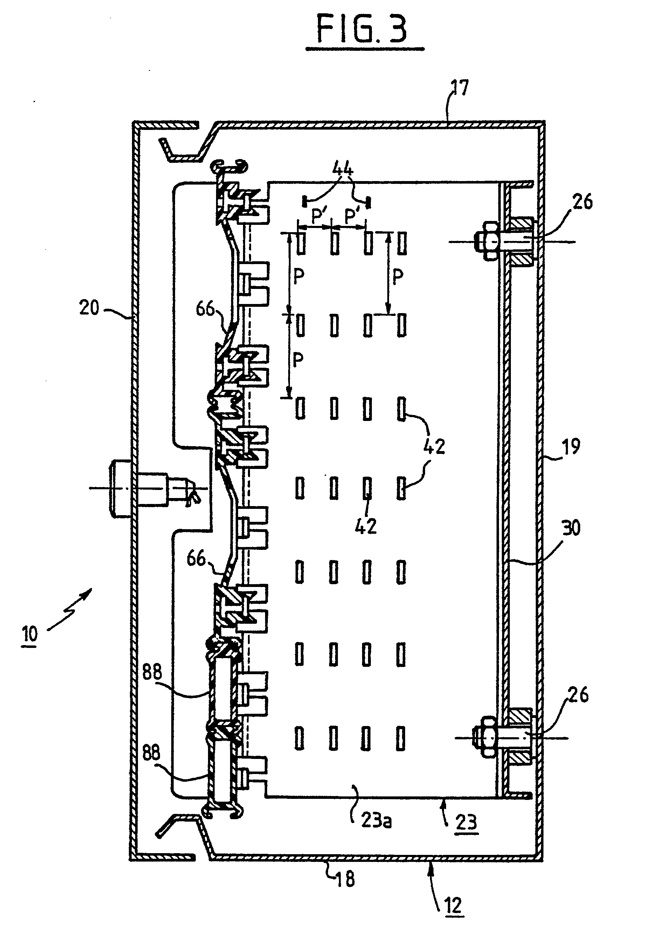

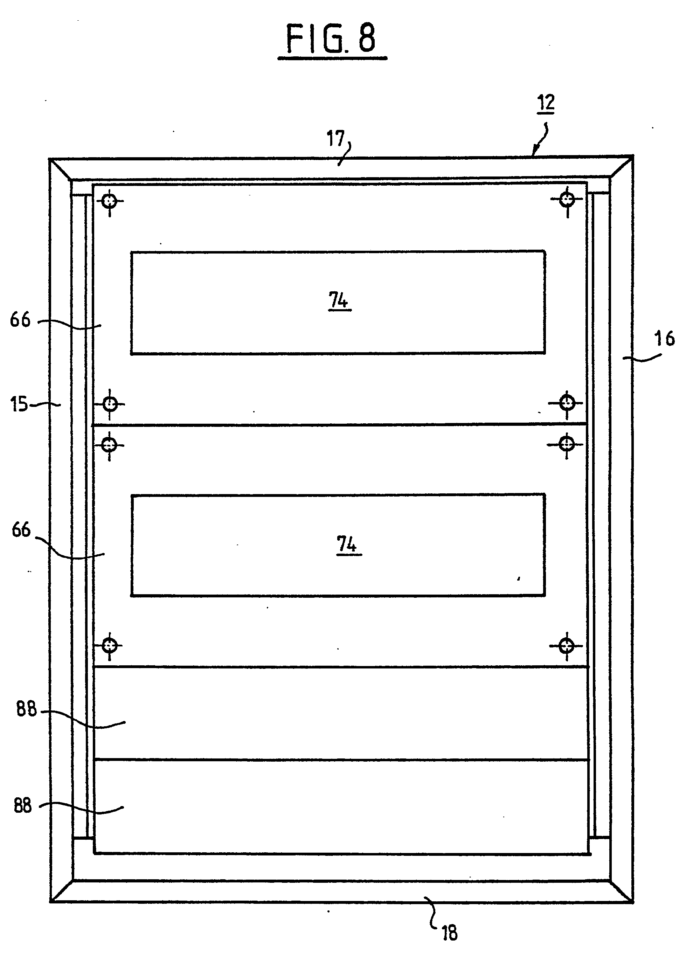

L'enveloppe métallique 12 est formée par l'assemblage de plaques de tôle pour constituer un parallélépipède droit muni en face avant verticale d'une porte pivotante : l'enveloppe présente ainsi deux faces latérales 15 et 16 (figure 2), une face supérieure 17 et une face inférieure 18 (figure 3), une face arrière ou de fond 19 (figures 2 et 3), et une face avant sur laquelle est ménagée une porte pivotante 20 (figures 2 et 3).

Comme il apparaît sur les figures 1 et 2, le châssis métallique 13 de support des appareillages comprend deux flasques latéraux identiques formant des montants verticaux, référencés globalement en 22 et 23, qui sont associés respectivement aux deux faces latérales 15 et 16 de l'enveloppe et qui s'étendent sensiblement sur toute la hauteur et sur toute la profondeur de l'enveloppe.

Chaque flasque latéral 22, 23 se compose d'une plaque perforée 22a, 23a qui est agencée parallèlement à la face latérale associée 15, 16 (figure 2) en étant légèrement espacée de celle-ci, et qui se prolonge, vers l'arrière, par une aile ou retour perforé 22b, 23b plié d'équerre en direction opposée à la face latérale associée, et vers l'avant, par une paroi crantée 22c, 23c pliée sensiblement en forme de V pointé également à l'opposé de la face latérale associée ; la paroi crantée se prolonge par un flanc latéral droit venant en appui contre une aile repliée de la face latérale associée, comme illustré à la figure 2.

Il est à noter que chaque flasque latéral 22, 23 décrit ci-dessus est obtenu par des opérations classiques de pliage et de poinçonnage à partir d'une même plaque de tôle, par exemple d'acier.

Les deux flasques latéraux 22 et 23 sont solidarisés à l'enveloppe au moyen d'organes de fixation constitués par exemple par quatre goujons identiques 26, visibles sur les figures 2 et 3, qui sont portés de façon classique par la face arrière interne 19 de l'enveloppe, aux quatre coins de celle-ci, et qui s'engagent dans des orifices correspondants 28 (figure 2) ménagés dans les deux ailes arrières 22b et 23b des deux flasques.

De manière facultative, une platine perforée de fixation d'appareillages, repérée en 30 sur les figures 2 et 3, peut être montée verticalement suivant toute la hauteur de l'enveloppe sur la face arrière interne 19 de celle-ci par engagement sur les quatre goujons 26 ; les deux ailes arrière 22b et 23b des flasques sont alors rapportées sur la platine 30 et l'ensemble est solidarisé au moyen des goujons de fixation 26.

On utilise cette platine perforée 30 agencée en fond de coffret avantageusement pour la fixation d'appareillages électriques dont l'accès n'est pas nécessaire en face avant du coffret, comme par exemple pour des contacteurs, des blocs de jonction.

Sur la figure 2, on a représenté en 32 et 33 deux languettes prévues respectivement sur les deux ailes arrières 22b et 23b des flasques et pliées à angle droit dans le même sens pour venir s'appliquer de part et d'autre de la platine perforée 30. Comme il est fréquent de constituer le châssis et de câbler les appareillages hors du coffret, et comme la platine utilisée est adaptée au type de coffret, ces deux languettes portées par les flasques latéraux et placées en appui contre les bords latéraux de la platine servent ainsi avantageusement de calibre pour le montage du châssis.

En outre, on indiquera qu'une platine perforée partielle, c'est-à-dire s'étendant suivant une partie seulement de la hauteur de l'enveloppe, peut également être montée verticalement en fond de coffret, derrière les deux ailes 22b et 23b des flasques latéraux. A cet effet, chaque aile arrière 22b, 23b est pourvue d'une ou de plusieurs séries d'orifices échelonnés suivant sa hauteur, illustrés en 35 et 36 pour l'aile 22b seule visible sur la figure 1, pour permettre le passage d'organes de fixation, tels que des boulons, de la platine perforée à un niveau prédéterminé des deux ailes des flasques latéraux.

Comme il apparaît sur les figures 1 et 2, le châssis métallique 13 de support des appareillages comprend également un rail profilé 38 disposé de chant perpendiculairement entre les deux flasques latéraux 22 et 23, et sur lequel sont encliquetés des appareillages électriques modulaires, dont un seul a été représenté en 40 sur la figure 1, notamment des disjoncteurs, contacteurs, fusibles.

Le rail profilé 38, figure 1, présente une âme verticale 38a bordée d'ailes supérieure 38b et inférieure 38c. A titre illustratif mais non limitatif, le rail profilé 38 est par exemple du type dénommé "chapeau" pour lequel les deux ailes ou rebords ont la même largeur, égale par exemple à 7,5 millimètres, et présentent entre elles un entraxe de fixation égal à 25 millimètres ; également, le rail 38 peut être un profilé dit "combiné", connu en soi, pour lequel les deux rebords ont la même largeur, égale par exemple à 15 millimètres, et présentent un entraxe de fixation de 25 millimètres.

Bien entendu, plusieurs rails profilés 38 peuvent être échelonnés à des niveaux différents suivant la hauteur de l'enveloppe, chacun étant pourvu d'une gamme d'appareillages modulaires déterminés. On rappellera que le pas des rangées d'appareillages le plus couramment utilisé pour les produits modulaires est égal à 125 millimètres.

Il va de soi que le nombre de rails utilisés est adapté à l'encombrement des appareillages à incorporer et au type de coffret. L'ensemble des rails profilés détermine à l'intérieur du coffret deux espaces partiels, le premier espace, situé entre les rails et la face avant du coffret, renfermant les appareillages, et le second espace, situé entre les rails et la face arrière du coffret, contenant la filerie.

Afin de permettre le réglage en hauteur et en profondeur des rails profilés en fonction de l'encombrement des appareillages modulaires à incorporer dans le coffret, la plaque 22a, 23a de chaque flasque latéral 22, 23 est munie de perforations identiques 42 qui sont réalisées par exemple sous forme de rectangles s'étendant en longueur dans le sens vertical, en étant échelonnés suivant toute la hauteur de la plaque avec un premier pas prédéterminé $p$ (figures 1 et 3) et en étant distribuées suivant des rangées avec un second pas prédéterminé $p'$ (figures 1 et 3). Ainsi, dans chaque exemple donné précédemment à propos du type de rail profilé, le pas $p$ est choisi égal à 25 millimètres, tandis que le pas $p'$ est choisi égal à 7,5 millimètres.

Le réglage en hauteur est facilité par des repères prévus sur la plaque perforée de chaque flasque pour permettre d'identifier des séries déterminées de perforations ; pour la plaque perforée 23a de la figure 3, on a représenté en 44 deux repères identiques constitués par exemple par de petites empreintes réalisées sur la plaque.

Selon une caractéristique de l'invention, chaque extrémité du rail profilé 38 est assemblée à la plaque perforée 22a, 23a du flasque latéral correspondant au moyen d'un dispositif de fixation, désigné par le repère général 46 sur les figures 1 et 2, que l'on va maintenant décrire en référence à ces figures.

Dans un mode d'exécution préféré, ce dispositif de fixation 46 comporte une équerre 48 supportant le rail profilé disposé de chant, et une plaque verticale de bridage 49 solidarisant le rail à l'équerre.

Plus en détail, l'équerre 48 est obtenue par pliage et poinçonnage et est formée par deux plaques pliées à angle droit : une première plaque 48a présente une forme de U et est munie d'un orifice taraudé 50 situé au voisinage de l'arête commune des deux plaques, la distance séparant les deux ailes de la plaque 48a étant légèrement supérieure à la hauteur du rail 38 disposé de chant ; la seconde plaque 48b présente deux pattes identiques d'accrochage 52 séparées par une échancrure centrale 54 en U et repliées sensiblement à angle droit dans le même sens, ainsi que deux lumières rectangulaires identiques 56 ménagées à partir de l'arête commune des deux plaques.

Les deux pattes 52 de la plaque 48b sont dimensionnées et agencées de manière à s'emboîter respectivement dans deux perforations successives 42 espacées du pas $p$ en prenant appui contre la face arrière de la plaque perforée associée 22a, 23a (figure 2) ; les deux lumières 56 de la plaque 48b en position accrochée sont agencées de manière à être en regard respectivement de deux autres perforations 42 situées aux mêmes niveaux que celles servant à l'accrochage des pattes.

Sur la figure 1, on a illustré par la flèche A le sens de montage de l'équerre 48 sur la plaque perforée 22a du flasque latéral 22, par accrochage des pattes 52 dans les perforations 42 correspondantes.

Après montage de chaque équerre 48, le rail profilé 38 est posé à chacune de ses extrémités sur l'équerre correspondante de telle sorte que la surface externe de son âme verticale 38a soit en appui contre la plaque 48a de l'équerre, sans obturer le trou taraudé 50 ; les deux côtés repliés de la plaque 48a de l'équerre embrassent respectivement les deux ailes du rail 38. La flèche B de la figure 1 montre le sens de pose du rail profilé 38 sur l'équerre correspondante 48.

Le rail profilé 38 est fixé sur chaque équerre 48 au moyen de la plaque verticale de bridage 49 qui présente deux pattes identiques d'accrochage, dont une seule est visible en 60 sur la figure 2, séparées par une échancrure centrale 61 (figure 1) et pliées à angle droit dans le même sens.

La plaque de bridage 49 est dimensionnée et positionnée de façon que, d'une part, ses deux pattes 60 s'engagent respectivement dans les deux lumières 56 de l'équerre et viennent s'accrocher dans les perforations 42 en regard de ces lumières en prenant appui contre la face arrière de la plaque perforée associée 22a, 23a (figure 2) et, d'autre part, le fond de son échancrure 61 porte sur la zone séparant les deux lumières 56 de l'équerre ; en position accrochée, la plaque de bridage 49 s'appuie contre la surface interne de l'âme 38a du rail porté par l'équerre 48. Sur la figure 1, on a illustré par la flèche C le sens de montage de la plaque de bridage 49.

Il est à noter qu'en position accrochée, les deux pattes 60 de la plaque de bridage 49 sont orientées en un sens inverse de celui des deux pattes 52 de l'équerre 48, comme on le voit bien sur la figure 2, ce qui assure une parfaite répartition des forces d'extension.

Des moyens de serrage sont également prévus pour enserrer l'âme du rail profilé 38 entre l'équerre 48 et la plaque de bridage associée 49 : ceux-ci sont constitués par exemple par une seule vis 63 coopérant avec le trou taraudé 50 de l'équerre via un orifice coaxial 64 (figure 1) ménagé dans la plaque de bridage ; après serrage, chaque extrémité de l'âme du rail 38 se trouve en butée contre la vis correspondante 63, comme illustré sur la figure 2.

Ainsi, l'assemblage décrit ci-dessus entre le rail profilé et chaque flasque latéral assure une fixation rigide du rail et ne nécessite aucune perforation de ce dernier.

Suivant une autre caractéristique de l'invention, chaque rail profilé 38 en position assemblée et portant une gamme d'appareillages modulaires dont l'accès est nécessaire en face avant du coffret, notamment des disjoncteurs, fusibles, est associé à un plastron vertical en matière isolante qui s'étend transversalement entre les deux flasques latéraux 22 et 23, en face avant de l'enveloppe du coffret, et qui est pourvu d'une lumière rectangulaire pour la venue en saillie des faces avant de ce type d'appareillage.

Sur la figure 1, on a désigné par le repère général 66 le plastron isolant associé au rail profilé 38 portant une gamme d'appareillages modulaires accessibles dont un seul a été illustré en 40 sur cette figure, la face avant d'accès de cet appareillage 40 étant dotée d'une manette de commande représentée schématiquement en 68.

Le plastron 66, figure 1, présente une forme générale rectangulaire dont la largeur est égale au pas des rangées d'appareillages, par exemple 125 millimètres pour le pas habituel pour produits modulaires, et se compose de deux longerons identiques 70 parallèles raccordés l'un à l'autre par un panneau commun 72, lequel est pourvu de la lumière rectangulaire 74.

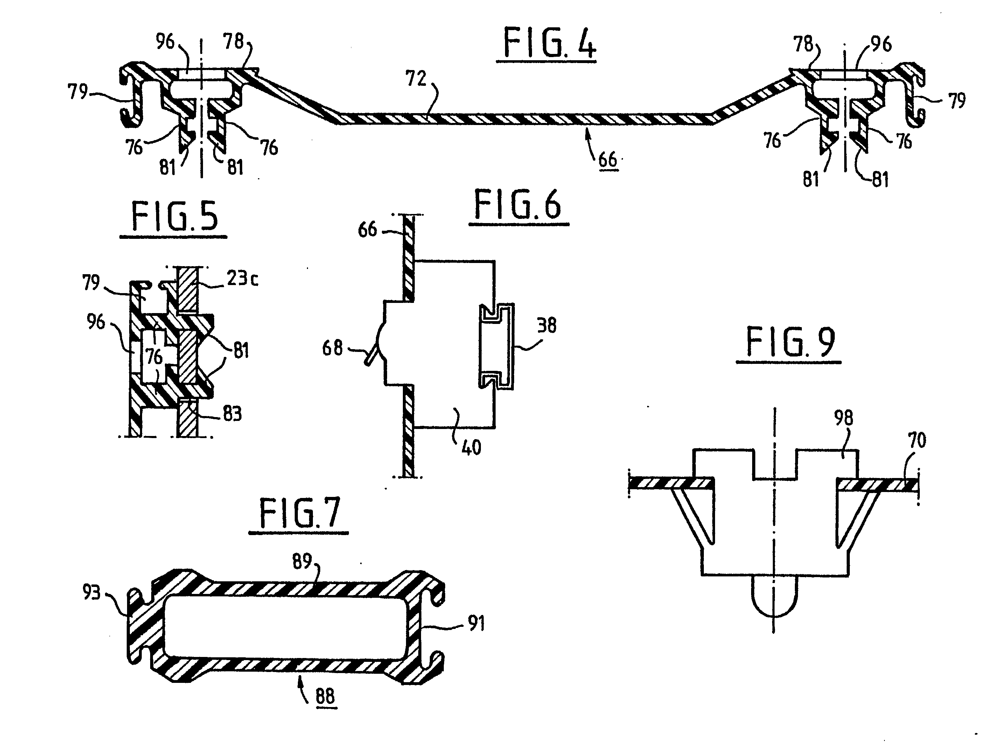

En référence aux figures 1 et 4, chaque longeron 70 est un profilé constitué de deux lèvres identiques longitudinales d'encliquetage 76 parallèles espacées l'une de l'autre et reliées entre elles par une paroi commune 78, l'une des lèvres étant raccordée au panneau 72, et d'une rainure longitudinale 79 présentant en section droite une forme de C (figure 4) ouvert vers l'extérieur et porté d'équerre par la lèvre 76 opposée à celle raccordée au panneau 72 ; les deux lèvres 76 se terminent chacune par une partie en forme de crochet 81 et sont tournées l'une vers l'autre, comme on le voit bien sur la figure 4.

Il est à noter que les deux longerons profilés raccordés l'un à l'autre par le panneau commun ajouré viennent de moulage à l'aide d'une matière plastique.

Le plastron 66 est agencé verticalement en regard du rail associé 38 et est fixé sur les deux flasques latéraux 22 et 23 par encliquetage des quatre lèvres 76 respectivement dans quatre encoches ou crans correspondants 83, de forme rectangulaire, ménagés transversalement dans les deux parois avant 22c et 23c des flasques. Sur la figure 1, on a illustré par la flèche E le sens d'encliquetage du plastron 66 sur les deux parois crantées 22c et 23c.

Les encoches 83, figure 1, sont distribuées par groupe de deux suivant la hauteur de chaque paroi 22c, 23c et sont échelonnées d'une paire à l'autre suivant le même pas p que les perforations 42, égal à 25 millimètres dans l'exemple choisi, de manière à respecter le réglage en hauteur des rails profilés associés aux plastrons.

La figure 5 montre la position encliquetée d'une partie du plastron sur la paroi crantée 23c du flasque latéral correspondant. Dans cette position, les extrémités en forme de crochet 81 des deux lèvres en regard 76 sont en appui contre la face arrière de la paroi crantée 23c, par insertion dans les deux encoches correspondantes 83 espacées l'une de l'autre d'une distance correspondant à l'écartement entre les lèvres.

Comme le montre la figure 6, après encliquetage du plastron ajouré, seule la face avant d'accès de l'appareillage modulaire 40 porté par le rail associé 38 en saillie du plastron 66 ; ainsi, le plastron 66 en position encliquetée masque, par ses longerons, les bornes de connexion 85 (figure 1) de l'appareillage 40, et dissimule la filerie associée.

Il peut également être prévu sur la face avant du panneau 72 (figure 1) du plastron 66 en position encliquetée des moyens de repérage (non figurés) des appareillages en saillie, constitués par exemple par des étiquettes adhésives.

Lorsque plusieurs rails profilés 38 de support d'appareillages modulaires à accès nécessaire en face avant du coffret sont disposés suivant toute la hauteur de l'enveloppe du coffret, les plastrons associés 66 en position encliquetée sont donc juxtaposés les uns aux autres et reconstituent ensemble la façade avant verticale de l'enveloppe ; cet agencement des plastrons donne au coffret un certain aspect esthétique lors de l'ouverture de sa porte, toute la filerie étant dissimulée.

De même, lorsque les rails 38 associés aux plastrons ajourés 66 sont agencés sur une partie seulement de la hauteur de l'enveloppe du coffret, le recouvrement de la façade avant de l'enveloppe est alors achevé au moyen de caches verticaux en matière isolante. Ces caches peuvent être constitués soit par des plastrons identiques à ceux référencés en 66 mais non ajourés dans le cas où le recouvrement à terminer correspond à un nombre exact de plastrons, soit, dans le cas contraire, par des bandeaux moulés de forme générale rectangulaire de largeur égale au pas p, 25 millimètres dans l'exemple choisi, associés éventuellement à des plastrons non ajourés.

En référence aux figures 1 et 7, chaque bandeau désigné par le repère général 88 est constitué par un panneau rectangulaire 89 se prolongeant d'un côté par une rainure longitudinale 91 présentant, en section droite, une forme de C (figure 7), et du côté opposé par une languette ou patte longitudinale 93 de forme conjuguée à la rainure 91, laquelle est identique à la rainure 79 (figure 1) de chaque longeron du plastron 66. Par cette configuration, les bandeaux 88 peuvent donc s'emboîter mutuellement les uns dans les autres, ainsi que dans les plastrons, ajourés ou non. Sur la figure 1, on a illustré par la flèche F le sens d'emboîtement du bandeau 88 dans le plastron ajouré 66, la languette 93 du bandeau venant s'accrocher dans la rainure conjuguée 79 du plastron.

A titre illustratif mais non limitatif, on a représenté sur les figures 3 et 8 la façade avant de l'enveloppe reconstituée par deux plastrons ajourés 66 encliquetés sur les deux flasques latéraux en étant juxtaposés l'un à l'autre, et par deux bandeaux 88 emboîtés l'un dans l'autre ainsi que dans le plastron approprié 66 ; sur ces figures, on n'a pas illustré les appareillages en saillie des deux plastrons 66.

Il est à noter qu'un plastron non ajouré peut également servir à obturer totalement une rangée d'appareillages modulaires dont l'accès n'est par nécessaire en face avant du coffret, notamment pour des contacteurs, blocs de jonction.

En outre, on indiquera que dans le cas où le pas donné des rangées d'appareillages modulaires est augmenté d'une valeur égale à au moins une fois le pas p, 25 millimètres dans l'exemple choisi, on intercale alors autant de bandeaux nécessaires 88 entre deux plastrons du type décrit précédemment, chaque bandeau ayant une largeur précisément égale à ce pas p.

Le démontage d'un plastron s'effectue au moyen d'un outil introduit successivement dans quatre orifices identiques 96 (figure 1) qui sont ménagés par paire aux deux extrémités de chaque longeron du plastron, au niveau de l'encliquetage sur les flasques latéraux, et qui communiquent avec l'espace séparant deux lèvres en regard 76, comme le montre la figure 4 ; par écartement des lèvres sous l'action de l'outil, le plastron se désolidarise alors des flasques latéraux.

Selon une variante, le démontage d'un plastron s'effectue au moyen de quatre vis quart de tour, dont une seule est visible en 98 sur la figure 9, encliquetées respectivement dans les quatre orifices 96 (figure 1) du plastron et coopérant avec les lèvres en regard ; par rotation quart de tour, la vis provoque l'écartement des lèvres et le plastron se désolidarise des flasques latéraux.

Après retrait des plastrons, le démontage de chaque bandeau utilisé s'effectue manuellement par un simple déboîtement.

Bien entendu, l'invention n'est nullement limitée au mode de réalisation décrit et représenté et comprend tous les équivalents techniques des moyens décrits ainsi que leurs combinaisons si celles-ci sont effectuées selon l'esprit de l'invention et mises en oeuvre dans le cadre des revendications qui suivent.

## Revendications

1. Coffret de logement d'appareillages électriques, comprenant une enveloppe (12) de forme parallélépipédique qui présente une face avant verticale et qui renferme :
- deux montants perforés (22, 23) situés dans un même plan et susceptibles d'être rapportés respectivement sur les deux faces latérales internes (15, 16) de l'enveloppe ;
- au moins un rail profilé (38) de support des appareillages électriques, comportant une âme verticale (38a) et s'étendant entre les deux montants, perpendiculairement à ceux-ci, en étant susceptible d'être placé à différents niveaux prédéterminés des montants, chaque extrémité du ou de chaque rail profilé étant assemblée au montant associé au moyen d'une équerre (48) formée par deux plaques perpendiculaires, l'une (48b) des plaques s'appuyant contre le montant et étant dotée d'au moins une première patte d'accrochage (52) venant s'emboîter dans une première perforation (42) du montant, ladite plaque (48b) étant percée d'au moins un orifice (56) situé de manière à venir en regard d'une seconde perforation (42) du montant lors de l'emboîtement de la première patte, l'autre plaque (48a) étant disposée de chant et recevant en appui le rail profilé ; caractérisé en ce que l'âme (38a) du rail profilé est solidarisée à la plaque (48a) de l'équerre recevant ledit rail au moyen d'une plaque verticale de bridage (49) qui s'appuie sur ladite âme et qui est dotée d'au moins une seconde patte d'accrochage (60) traversant l'orifice (56) et venant s'emboîter dans la seconde perforation (42) du montant.

2. Coffret selon la revendication 1, caractérisé en ce qu'en position assemblée du rail profilé et du montant associé, l'âme (38a) du rail appliquée sur une partie seulement de la plaque (48a) de l'équerre recevant le rail, et en ce que la plaque de bridage (49) et la partie restante de cette plaque (48a) de l'équerre présentent des moyens de serrage coopérants (50, 63) pour enserrer l'âme du rail entre la plaque de bridage et la plaque de l'équerre recevant le rail.

3. Coffret selon la revendication 2, caractérisé en ce que les moyens de serrage comportent une vis (63) traversant une ouverture (64) ménagée dans la plaque de bridage (49) et s'engageant dans un taraudage (50) réalisé dans la partie restante de la plaque (48a) de l'équerre recevant le rail.

4. Coffret selon l'une des revendications 1 à 3, caractérisé en ce qu'en position assemblée du rail profilé et du montant associé :
a) le bord vertical de la plaque (48b) de l'équerre s'appuyant contre le montant présente deux premières pattes d'accrochage (52) qui sont séparées par une échancrure centrale (54) en U et qui sont pliées dans le même sens en une équerre sensiblement à partir du fond de l'échancrure, ces deux pattes s'engageant respectivement dans deux premières perforations (42) ménagées verticalement dans le montant pour s'y accrocher ;
b) l'un des bords verticaux de la plaque de bridage (49) présente deux secondes pattes d'accrochage (60) qui sont séparées par une autre échancrure centrale (61) en U dont le fond porte sur le montant, et qui ont leurs extrémités respectives pliées dans le même sens sensiblement à angle droit, ces deux pattes s'engageant respectivement via deux orifices de passage (56) percés dans la plaque de l'équerre s'appuyant contre le montant, dans deux secondes perforations (42) ménagées verticalement dans le montant pour s'y accrocher, ces secondes perforations étant situées aux mêmes niveaux que les premières.

5. Coffret selon la revendication 4, caractérisé en ce qu'en position d'accrochage, les deux paires de pattes (52, 60) sont orientées en sens inverse l'une de l'autre.

6. Coffret selon l'une des revendications précédentes, caractérisé en ce que les perforations (42) de chaque montant ont une forme rectangulaire.

7. Coffret selon l'une des revendications précédentes, caractérisé en ce que l'âme verticale (38a) du ou de chaque rail profilé est bordée d'ailes (38b, 38c) dirigées vers la face avant de l'enveloppe du coffret, et en ce que la plaque (48a) de chaque équerre recevant le même rail présente une forme de U dont la base porte l'âme du rail et dont les côtés embrassent les ailes dudit rail.

8. Coffret selon l'une des revendications précédentes,

caractérisé en ce que chaque montant se compose d'une plaque verticale (22a ; 23a) qui s'étend parallèlement au plan de la face latérale correspondante de l'enveloppe du coffret, sensiblement sur toute la hauteur de ladite enveloppe, et qui est pourvue des perforations (42), lesquelles sont échelonnées suivant sensiblement toute la hauteur de la plaque avec un premier pas prédéterminé (p) et sont distribuées suivant des rangées avec un second pas prédéterminé (p') égal ou différent du premier.

9. Coffret selon la revendication 8,
caractérisé en ce que la plaque verticale perforée (22a ; 23a) de chaque montant se prolonge par un retour postérieur vertical (22b ; 23b) qui est plié d'équerre et qui est fixé sur la face arrière de l'enveloppe du coffret au moyen d'organes de fixation (26) portés par cette face.

10. Coffret selon la revendication 9,
caractérisé en ce que les organes de fixation sont constitués par des goujons (26) pénétrant dans des ouvertures (28) ménagées dans le retour postérieur de chaque montant.

11. Coffret selon l'une des revendications 9 et 10,
caractérisé en ce qu'une platine perforée (30) est interposée verticalement entre la face arrière (19) de l'enveloppe du coffret et le retour postérieur (22b ; 23b) de chaque montant, et est maintenue en place au moyen des organes de fixation (26), la platine étant destinée à porter des appareillages électriques dont l'accès n'est pas nécessaire en face avant de l'enveloppe du coffret.

12. Coffret selon l'une des revendications 8 à 11,
pour des appareillages électriques modulaires dont l'accès est nécessaire en face avant de l'enveloppe du coffret, le ou chaque rail profilé (38) portant ces appareillages étant susceptible d'être placé à différents niveaux prédéterminés tant dans le sens de la hauteur que dans celui de la profondeur de l'enveloppe en fonction de l'encombrement des appareillages, le coffret comprenant une porte (20) agencée en face avant de l'enveloppe permettant, en position ouverte, l'accès aux faces avant des appareillages,
caractérisé en ce que la plaque verticale perforée (22a ; 23a) de chaque montant se prolonge par un retour antérieur vertical (22c ; 23c) qui s'étend parallèlement au plan de la face avant de l'enveloppe et qui est pourvu verticalement d'encoches (83) espacées suivant le premier pas prédéterminé (p), et en ce que le ou chaque rail profilé (38) est associé à un plastron vertical (66) de masquage des bornes des appareillages, en matière isolante et de forme générale rectangulaire, qui s'étend transversalement entre les deux montants en étant fixé par encliquetage sur ceux-ci au moyen d'organes de fixation (76) s'engageant dans les encoches (83) du retour antérieur de chaque montant, et qui est pourvu sur sa longueur d'une lumière rectangulaire (74) permettant la venue en saillie des faces avant des appareillages.

13. Coffret selon la revendication 12,
caractérisé en ce que chaque plastron (66) présente deux longerons profilés (70) parallèles raccordés l'un à l'autre par un panneau commun (72) dans lequel est ménagée la lumière rectangulaire (74), et en

ce que les organes de fixation sont constitués par quatre lèvres (76) parallèles en forme de crochet, portées deux par deux le long de chaque longeron et agencées perpendiculairement aux longerons dans la direction d'encliquetage, les lèvres d'une même paire étant légèrement espacées l'une de l'autre et étant tournées l'une vers l'autre pour venir s'encliqueter respectivement dans deux encoches (83) voisines correspondantes du retour antérieur de chaque montant, les encoches de chaque montant étant échelonnées d'une paire à l'autre suivant le premier pas prédéterminé.

14. Coffret selon la revendication 13,
caractérisé en ce que les lèvres (76) d'encliquetage du plastron, ainsi que les deux longerons (70) reliés entre eux par le panneau (72) pourvu de la lumière rectangulaire, constituent une seule et même pièce réalisée par moulage à l'aide d'une matière plastique.

15. Coffret selon l'une des revendications 13 et 14,
caractérisé en ce que la face avant de chacun des deux longerons (70) du ou de chaque plastron (66) en position encliquetée comporte deux orifices (96) d'introduction d'un outil qui sont placés au niveau de l'encliquetage du plastron sur les deux montants et qui communiquent avec l'espace séparant les lèvres d'encliquetage d'une même paire de manière à permettre le démontage du plastron par écartement des lèvres sous l'action de l'outil.

16. Coffret selon l'une des revendications 13 et 14,
caractérisé en ce que la face avant de chacun des deux longerons (70) du ou de chaque plastron (66) en position encliquetée comporte deux orifices (96) qui sont placés au niveau de l'encliquetage du plastron sur les deux montants et qui communiquent avec l'espace séparant les lèvres d'encliquetage d'une même paire, et en ce qu'une vis quart de tour (98) est logée dans chaque orifice et coopère avec les lèvres de manière à permettre le démontage du plastron par dévissage.

17. Coffret selon l'une des revendications 13 à 16,
caractérisé en ce qu'il est prévu sur la face avant du panneau (72) de raccordement des deux longerons du ou de chaque plastron (66) en position encliquetée des moyens de repérage des appareillages venant en saillie.

18. Coffret selon l'une des revendications 12 à 17,
caractérisé en ce que, pour une pluralité de rails profilés (38) espacés dans le sens de la hauteur de l'enveloppe suivant un pas donné égal à un multiple du premier pas prédéterminé, les plastrons associés (66) présentent chacun, en position encliquetée, une hauteur égale au pas des rails supports des appareillages, et sont juxtaposés les uns aux autres en étant situés dans un même plan parallèle à celui de la face avant de l'enveloppe.

19. Coffret selon la revendication 18,
caractérisé en ce que, dans le cas où les rails (38) supports des appareillages sont échelonnés suivant toute la hauteur de l'enveloppe du coffret, les plastrons associés (66) juxtaposés recouvrent totalement la face avant de l'enveloppe.

20. Coffret selon la revendication 18,
caractérisé en ce que, dans le cas où les rails (38) supports des appareillages sont échelonnés suivant une partie seulement de la hauteur de l'enveloppe du coffret, les plastrons associés (66) juxtaposés recouvrent cette partie de la face avant de l'enveloppe, tandis que la partie restante de cette face avant est recouverte au moyen d'au moins un plastron supplémentaire vertical (66) identique aux autres mais dépourvu de lumière et/ou d'au moins un bandeau vertical isolant (88) s'étendant transversalement entre les deux montants et présentant une hauteur égale au premier pas prédéterminé, le ou chaque plastron supplémentaire venant se fixer par encliquetage sur les montants, et en ce que le ou chaque bandeau comporte un panneau rectangulaire (89) pourvu sur l'un de ses bords longitudinaux d'une patte d'accrochage (93) et sur son autre bord longitudinal d'une rainure (91) de forme conjuguée à la patte, ladite patte (93) venant s'emboîter soit dans une rainure conjuguée (79) ménagée dans un plastron soit dans la rainure conjuguée (91) d'un autre bandeau.

21. Coffret selon les revendications 13 et 20, caractérisé en ce que la patte d'accrochage (93) et la rainure (91) du ou de chaque bandeau s'étendent sur toute la longueur du panneau, et en ce que les deux longerons (70) du ou de chaque plastron sont pourvus chacun sur toute leur longueur de la rainure (79) susceptible de recevoir la patte d'un bandeau.

22. Coffret selon l'une des revendications 20 et 21, caractérisé en ce que le panneau (89) du ou de chaque bandeau muni de la patte d'accrochage (93) et de la rainure (91) vient de moulage à l'aide d'une matière plastique.

23. Coffret selon l'une des revendications 20 à 22, caractérisé en ce qu'au moins un bandeau (88) est susceptible de servir d'intercalaire entre deux plastrons (66) pourvus chacun d'une lumière lorsque le pas donné des rails supports des appareillages est augmenté d'une valeur égale à au moins une fois le premier pas prédéterminé (p).

**Claims**

1. Housing for electrical apparatuses, comprising a case (12) of parallelepipedic shape which has a vertical front face and which contains:
 – two perforated uprights (22, 23) situated in the same plane and able to be fixed respectively on the two internal lateral faces (15, 16) of the case;
 – at least one profiled rail (38) supporting the electrical apparatuses, comprising a vertical web (38a) and extending be tween the two uprights, perpendicularly thereto, while being positionable at different predetermined levels of the uprights, each end of the or each profiled rail being assembled with the associated upright by means of a bracket (48) formed by two perpendicular plates, one (48b) of the plates bearing against the upright and having at least a first fastening lug (52) fitting into a first perforation (42) of the upright, said plate (48b) being pierced with at least one orifice (56) placed so as to come opposite a second perforation (42) of the upright during fitting of the first lug, the other plate (48a) being disposed on edge and receiving in abutment the profiled rail;
 characterized in that the web (38a) of the profiled rail is made fast with the plate (48a) of the bracket receiving said rail by means of a vertical flanging plate (49) which bears on said web and which has at least a second fastening lug (60) passing through the orifice (56) and fitting into the second perforation (42) of the upright.

2. Housing according to claim 1, characterized in that in the assembled position of the profiled rail and of the associated upright, the web (38a) of the rail is applied on a part only of the plate (48a) of the bracket receiving said rail and in that the flanging plate (49) and the remaining part of this plate (48a) of the bracket have cooperating clamping means (50, 63) for clamping the web of the rail; between the flanging plate and the plate of the bracket receiving said rail.

3. Housing according to claim 2, characterized in that the clamping means comprise a screw (63) passing through an opening (64) formed in the flanging plate (49) and engaging in a tapped hole (50) formed in the remaining part of the plate (48a) of the bracket receiving said rail.

4. Housing according to one of claims 1 to 3, characterized in that in the assembled position of the profiled rail and the associated upright:
 a) the vertical edge of the plate (48b) of the bracket bearing against the upright has two first fastening lugs (52) which are separated by a central U shaped indentation (54) and which are bent in the same direction in the form of a right-angled bracket substantially from the bottom of the indentation, these two lugs engaging respectively in two first perforations (42) formed vertically in the upright for fastening therein;
 b) one of the vertical edges of the flanging plate (49) has two second fastening lugs (60) which are separated by another central U shaped indentation (61) whose bottom carries the upright, and which have their respective ends bent in the same direction substantially at right angles, these two lugs being engaged respectively via two passage orifices (56) pierced in the plate of the bracket bearing against the upright, in two second perforations (42) formed vertically in the upright for being fastened therein, these second perforations being situated at the same levels as the first ones.

5. Housing according to claim 4, characterized in that, in the fastening position, the two pairs of lugs (52, 60) are oriented in opposite directions to each other.

6. Housing according to one of the preceding claims, characterized in that the perforations (42) of each upright have a rectangular shape.

7. Housing according to one of the preceding claims, characterized in that the vertical web (38a) of the or each profiled rail is bordered with flanges (38b, 38c) directed towards the front face of the case of the housing and in that the plate (48a) of each bracket receiving the same rail has a U shape whose base carries the web of the rail and whose sides grip round the flanges of said rail.

8. Housing according to one of the preceding claims, characterized in that each upright is formed of a vertical plate (22a; 23a) which extends parallel to the plane of the corresponding lateral face of the case of the housing, substantially over the whole height of said case and which is provided with perforations (42) which are spaced apart substantially over the whole height of the plate with a first pre-determined spacing (p) and are distributed in rows with a second pre-determined spacing (p') equal to or different from the first one.

9. Housing according to claim 8, characterized in that the vertical perforated plate (22a; 23a) of each upright is extended by a rear vertical flange (22b; 23b) which is bent at right angles and which is fixed on the rear face of the case of the housing by means of fixing members (26) carried by this face.

10. Housing according to claim 9, characterized in that the fixing members are formed by stud-bolts (26) penetrating into openings (28) formed in the rear flange of each upright.

11. Housing according to one of claims 9 and 10, characterized in that a perforated plate (30) is interposed vertically between the rear face (19) of the case of the housing and the rear flange (22b; 23b) of each upright and is held in position by fixing members (26), the plate being intended to carry electrical apparatuses access to which is not required on the front face of the case of the housing.

12. Housing according to one of claims 8 to 11 for modular electrical apparatus access to which is required on the front face of the case of the housing, the or each profiled rail (38) carrying these apparatuses being able to be placed at different pre-determined levels heightwise and depthwise of the case as a function of the size of the apparatuses, the housing comprising a door (20) disposed on the front face of the case and, in the open position, giving access to the front faces of the apparatuses, characterized in that the vertical perforated plate (22a; 23a) of each upright is extended by a vertical front flange (22c; 23c) which extends parallel to the plane of the front face of the case and which is provided vertically with notches (83) spaced apart by a first predetermined spacing (p), and in that the or each profiled rail (38) is associated with a vertical screen (66) for masking the terminals of the apparatuses, which is made of an insulating material and has a general rectangular shape and which extends transversely between the two uprights while being snap-fitted thereon by fixing members (76) engaging in the notches (83) of the front flange of each upright, and which is provided over its length with a rectangular aperture (74) permitting the front faces of the apparatuses to project.

13. Housing according to claim 12, characterized in that each screen (66) has two profiled parallel longitudinal members (70) connected together by a common panel (72) in which the rectangular aperture (74) is formed and in that the fixing members are formed by four parallel hook shaped lips (76) carried two by two along each longitudinal member and fitted perpendicularly to the longitudinal members in the snap-fit direction, the lips of a same pair being spaced slightly apart and being turned towards each other so as to snap-fit respectively into two corresponding adjacent notches (83) in the front flange of each upright, the notches of each upright being spaced apart from one pair to the next pair by the first pre-determined spacing.

14. Housing according to claim 13, characterized in that the snap-fit lips (76) of the screen and the two longitudinal members (70) connected together by the panel (72) having the rectangular aperture, form one and the same part moulded from a plastic material.

15. Housing according to one of claims 13 and 14, characterized in that the front face of each of the two longitudinal members (70) of the or each screen (66) in the snap-fitted position comprises two orifices (96) for inserting a tool which are placed at the level of the snap-fitting of the screen on the two uprights and which communicate with the space separating the snap-fit lips of the same pair so that the screen can be removed by moving the lips apart under the action of the tool.

16. Housing according to one of claims 13 and 14, characterized in that the front face of each of the two longitudinal members (70) of the or each screen (66) in the snap-fitted position comprises two orifices (96) which are placed at the level of the snap-fitting of the screen on the two uprights and which communicate with the space separating the snap-fit lips of the same pair, and in that a quarter of a turn screw (98) is housed in each orifice and cooperates with the lips so as to permit removal of the screen by unscrewing.

17. Housing according to one of claims 13 to 16, characterized in that on the front face of the panel (72) connecting the two longitudinal members of the or each screen (66) together in the snap-fitted position, means are provided for marking the projecting apparatuses.

18. Housing according to one of claims 12 to 17, characterized in that, for a plurality of profiled rails (38) spaced apart in the height direction of the case with a given spacing equal to a multiple of the first predetermined spacing, the associated screens (66) each have, in the snap-fitted position, a height equal to the spacing of the rails supporting the apparatuses and are juxtaposed with each other while being situated in the same plane parallel to that of the front face of the case.

19. Housing according to claim 18, characterized in that, in the case where the rails (38) supporting the apparatuses are spaced apart over the whole height of the case of the housing, the associated juxtaposed screens (66) cover the front face of the case completely.

20. Housing according to claim 18, characterized in that, in the case where the rails (38) supporting the apparatuses are spaced apart over only a part of the height of the case of the housing, the associated juxtaposed screens (66) cover this part of the front face of the case, whereas the remaining part of this front face is covered by at least one additional vertical screen (66) identical to the other but having no aperture and/or at least a vertical insulating fascia strip (88) extending transversely between the two uprights and having a height equal to the first pre-determined spacing, the or each additional screen being fixed by snap-fitting on the uprights and in that the or each fascia strip comprises a rectangular panel (89) with on one of its longitudinal edges a fastening lug (93) and on its other longitudinal edge a groove (91) of a shape mating with the lug, said lug (93) being fitted either into a mating groove (79) formed in a screen or in the mating groove (91) of another fascia strip.

21. Housing according to claims 13 and 20, characterized in that the fastening lug (93) and the groove (91) of the or each fascia strip extend over the whole length of the panel and in that the two longitudinal members (70) of the or each screen are each provided on the whole of their length with the groove (79) capable of receiving the lug of a fascia strip.

22. Housing according to one of claims 20 and 21, characterized in that the panel (89) of the or each fascia strip having the fastening lug (93) and the groove (91) is moulded from a plastic material.

23. Housing according to one of claims 20 to 22, characterized in that at least one fascia strip (88) is able to serve as insert between two screens (66) each having an aperture when the given spacing of the rails supporting the apparatuses is increased by a value equal to at least once the first pre-determined spacing (p).

**Patentansprüche**

1. Gehäuse für elektrische Geräte mit einem quaderförmigen Mantel (12), der eine senkrechte Vorderseite aufweist und aufnimmt: ·

– zwei mit Bohrungen versehene Ständer (22, 23), die in der gleichen Ebene angeordnet sind und jeweils an den beiden inneren Seitenflächen (15, 16) des Mantels befestigt werden können ;

– mindestens eine mit einem senkrechten Kern (38a) versehene Profilträgerschiene (38) für die elektrischen Geräte, welche sich zwischen den zwei Ständern parallel zu diesen erstreckt und in verschiedenen vorbestimmten Ebenen der Ständer angeordnet werden kann, wobei jedes Ende der Profilschiene oder jeder Profilschiene mittels eines Winkels (48) an den zugeordneten Ständer montiert wird und besagter Winkel aus zwei senkrecht zueinander angeordneten Platten besteht, deren eine (48b) an dem Ständer anliegt und mindestens eine erste Einfanglasche (52) besitzt, die in eine erste Bohrung (42) des Ständers eingreift und durch besagte Platte (48b) mindestens ein Loch (56) gebohrt ist, das so angeordnet ist, dass es einer zweiten Bohrung (42) im Ständer gegenüber zu liegen kommt, wenn die erste Lasche eingeschoben ist und die andere Platte (48a) hochkant angeordnet ist und die Profilschiene gegen sie zur Anlage gebracht wird, dadurch gekennzeichnet, dass der Kern (38a) der Profilschiene an der Platte (48a) des Winkels, der die Profilschiene aufnimmt mittels einer senkrechten Flanschplatte (49) befestigt ist, die an besagtem Kern anliegt und mindestens eine zweite Einfanglasche (60) aufweist, welche durch die Öffnung (56) reicht und in die zweite Bohrung (42) des Ständers eingreift.

2. Gehäuse nach Anspruch 1, dadurch gekennzeichnet, dass, wenn die Profilschiene und der zugeordnete Ständer zusammengebaut sind, der Kern (38a) der Schiene nur auf einem Teil der Platte (48a) des die Schiene aufnehmenden Winkels ruht und dass die Flanschplatte (49) und der restliche Teil dieser Platte (48a) des Winkels Mittel (50, 63) aufweisen, die zusammenarbeiten, um den Schienenkern zwischen der Flanschplatte und der die Schiene aufnehmenden Winkelplatte klemmend zu halten.

3. Gehäuse nach Anspruch 2, dadurch gekennzeichnet, dass die Klemmmittel eine Schraube (63) aufweisen, welche durch eine in der Flanschplatte (49) angebrachte Öffnung (64) reicht und in ein im restlichen Teil der Platte (48a) des die Schiene aufnehmenden Winkels angebrachtes Innengewinde (50) eingreift.

4. Gehäuse nach einem der Ansprüche 1 bis 3, dadurch gekennzeichnet, dass, wenn die Profilschiene und der zugeordnete Ständer zusammengebaut sind:

a) die senkrechte, gegen den Ständer anliegende, Kante der Platte (48b) des Winkels zwei erste, durch eine zentrale U-förmige Aussparung (54) getrennte Einfanglaschen (52) aufweist, die, etwa vom Boden der Aussparung ausgehend, in die gleiche Richtung rechtwinklig abgebogen sind und jeweils in zwei erste, senkrecht im Träger angebrachte Bohrungen (42) eingreifen und sich dort festhaken ;

b) eine der senkrechten Kanten der Flanschplatte (49) zwei zweite Einfanglaschen (60) aufweist, die durch eine weitere zentrale U-förmige Aussparung (61), deren Boden am Ständer anliegt, getrennt sind und deren jeweilige Enden in die gleiche Richtung etwa rechtwinklig umgebogen sind, wobei besagte beiden Laschen jeweils mittels zweier in die am Ständer anliegende Winkelplatte gebohrte Durchgangsöffnungen (56) in zwei zweite senkrecht im Ständer angebrachte Bohrungen (42) eingreifen und sich dort festhaken, wobei besagte zweite Bohrungen in der gleichen Ebene wie die ersten angeordnet sind.

5. Gehäuse nach Anspruch 4, dadurch gekennzeichnet, dass in der Einfangstellung die beiden Laschenpaare (52, 60) in entgegengesetzte Richtungen weisen.

6. Gehäuse nach einem der vorhergehenden Ansprüche, dadurch gekennzeichnet, dass die Bohrungen (42) jedes Ständers rechteckig sind.

7. Gehäuse nach einem der vorhergehenden Ansprüche, dadurch gekennzeichnet, dass an den Rändern des senkrechten Kerns (38a) der oder jeder Profilschiene gegen die Vorderfläche des Gehäusemantels gerichtete Flügel (38b, 38c) angeordnet sind und dass die Platte (48a) eines jeden die gleiche Schiene aufnehmenden Winkels die Form eines U hat, dessen Boden den Schienenkern trägt und dessen Seitenteile die Flügel der besagten Schiene umgreifen.

8. Gehäuse nach einem der vorhergehenden Ansprüche, dadurch gekennzeichnet, dass jeder Ständer aus einer senkrechten Platte (22a, 23a) besteht, welch sich parallel zur Ebene des entsprechenden Seitenteils des Gehäusemantels im wesentlichen über dessen gesamte Höhe erstreckt und mit Bohrungen (42) versehen ist, die im wesentlichen über die gesamte Höhe der Platte verteilt angeordnet sind, mit einem ersten vorbestimmten Abstand (p) und mit einem zweiten vorbestimmten Abstand (p'), der gleich dem ersten ist oder von diesem abweicht in Reihen angeordnet sind.

9. Gehäuse nach Anspruch 8, dadurch gekennzeichnet, dass die mit Bohrungen versehene senkrechte Platte (22a, 23a) jedes Ständers durch einen hinteren, senkrechten, im rechten Winkel abgebogenen Flansch (22b, 23b) verlängert wird, der an der Hinterseite des Gehäusemantels mittels auf besagter Fläche befindlicher Befestigungsmitteln (26) befestigt wird.

10. Gehäuse nach Anspruch 9, dadurch gekennzeichnet, dass die Befestigungsmittel von Stiftbolzen (26) gebildet werden, die in im hinteren Flansch jedes Ständers angeordnete Öffnungen (28) eingreifen.

11. Gehäuse nach einem der Ansprüche 9 und 10, dadurch gekennzeichnet, dass eine perforierte Platte (30) senkrecht zwischen der Hinterseite (19) des Gehäusemantels und dem hinteren Flansch (22b, 23b) eines jeden Ständers angeordnet und durch Befestigungsmittel (26) gehalten ist und diese Platte dazu bestimmt ist, elektrische Geräte zu tragen, die nicht von der Vorderseite des Gehäusemantels her zugänglich sein müssen.

12. Gehäuse nach einem der Ansprüche 8 bis 11 für modulare elektrische Geräte, die von der Vorderseite des Gehäusemantels her zugänglich sein müssen, wobei die Profilschiene oder jede besagte Geräte tragende Profilschiene (38) in verschiedenen vorbestimmten Ebenen, sowohl in bezug auf die Höhe als auch auf die Tiefe des Mantels, je nach den Abmessungen der Geräte angeordnet werden kann und das Gehäuse eine auf der Vorderseite des Mantels angeordnete Tür (20) aufweist, deren Öffnung den Zugang zur Vorderseite der Geräte ermöglicht, dadurch gekennzeichnet, dass die senkrechte, mit Bohrungen versehene Platte (22a, 23a) jedes Ständers durch einen vorderen senkrechten Flansch (22c, 23c) verlängert ist, der sich parallel zur Ebene der Mantelvorderseite erstreckt und senkrecht mit in einem ersten vorbestimmten Abstand (p) angeordneten Einschnitten (83) versehen ist und dass der oder jeder Profilschiene (38) ein senkrechter im wesentlichen rechteckiger Schirm (66) aus Isoliermaterial zur Überdeckung der Geräteklemmen zugeordnet ist, der sich quer zwischen den beiden Ständern erstreckt und durch Einrasten an diesen befestigt wird, mittels Befestigungsmitteln (76), die in die Einschnitte (83) des vorderen Flansches eines jeden Ständers eingreifen und der über seine gesamte Länge eine rechteckige Öffnung (74) aufweist, aus der die Vorderseiten der Geräte vorspringen können.

13. Gehäuse nach Anspruch 12, dadurch gekennzeichnet, dass jeder Schirm (66) zwei parallele Profillängsträger (70) aufweist, die durch eine gemeinsame Platte (72) verbunden sind, in der eine rechteckige Öffnung (74) angebracht ist, und dass die Befestigungsmittel von vier parallelen hakenförmigen Lippen (76) gebildet werden, die jeweils zu zweien von der Längsseite des Längsträgers getragen werden und senkrecht zu diesen in Einrastrichtung angeordnet sind, wobei die Lippen eines Paares in geringem Abstand voneinander angeordnet und einander zugewandt sind, um jeweils in zwei benachbarten entsprechenden Einschnitten (83) des vorderen Flansches eines jeden Ständers einzurasten und die Einschnittpaare jedes Ständers in einem ersten vorbestimmten Abstand voneinander angeordnet sind.

14. Gehäuse nach Anspruch 13, dadurch gekennzeichnet, dass die Einrastlippen (76) des Schirms sowie die beiden Längsträger (70), die durch die mit der rechteckigen Öffnung versehene Platte (72) verbunden sind, ein einziges, durch Formung aus Plastikmaterial hergestelltes Teil bilden.

15. Gehäuse nach einem der Ansprüche 13 und 14, dadurch gekennzeichnet, dass die Vorderseite eines jeden der beiden Längsträger (70) des Schirms oder jedes Schirms (66) in der eingerasteten Stellung zwei Öffnungen (96) zur Einführung eines Werkzeugs aufweist, die in der Ebene angeordnet sind, wo der Schirm auf den zwei Ständern einrastet und mit dem Trennraum zwischen den Einrastlippen eines Paares in Verbindung stehen, um die Abnahme des Schirms durch Spreizung der Lippen mittels des Werkzeugs zu ermöglichen.

16. Gehäuse nach einem der Ansprüche 13 und 14, dadurch gekennzeichnet, dass die Vorderseite eines jeden der beiden Längsträger (70) des Schirms oder jedes Schirms (66) in der eingerasteten Stellung zwei Öffnungen (96) aufweist, die in der Ebene angeordnet sind, wo der Schirm auf den zwei Ständern einrastet und mit dem Trennraum zwischen den Einrastlippen eines Paares in Verbindung stehen und dass eine Vierteldrehungsschraube (98) in jeder Öffnung angeordnet ist und mit den Lippen zusammenarbeitet, so dass der Schirm durch Losschrauben abgenommen werden kann.

17. Gehäuse nach einem der Ansprüche 13 bis 16, dadurch gekennzeichnet, dass auf der Vorderseite der Platte (72) zur Befestigung der beiden Längsträger des Schirms oder jedes Schirms (66) in der eingerasteten Stellung Mittel zur Bestimmung der vorstehenden Geräte vorgesehen sind.

18. Gehäuse nach einem der Ansprüche 12 bis 17, dadurch gekennzeichnet, dass, bei einer Vielzahl von Profilschienen (38), die in Richtung der Mantelhöhe in einem Abstand angeordnet sind, welcher ein Vielfaches des ersten vorbestimmten Abstandes ist, die zugeordneten Schirme (66) jeweils in der eingerasteten Stellung eine Höhe haben, die dem Abstand der Trägerschienen für die Geräte voneinander entspricht und nebeneinander in ein und derselben Ebene angeordnet sind, die parallel zur Ebene der Mantelvorderseite verläuft.

19. Gehäuse nach Anspruch 18, dadurch gekennzeichnet, dass, wenn die Trägerschienen (38) für die Geräte über die gesamte Höhe des Gehäusemantels verteilt sind, die zugeordneten nebeneinander angeordneten Schirme (66) die Mantelvorderseite gänzlich bedecken.

20. Gehäuse nach Anspruch 18, dadurch gekennzeichnet, dass, wenn die Trägerschienen (38) für die Geräte nur über einen Teil der Höhe des Gehäusemantels verteilt sind, die zugeordneten und nebeneinander angeordneten Schirme (66) diesen Teil der Mantelvorderseite bedecken, während der restliche Teil der besagten Vorderseite durch mindestens einen zusätzlichen senkrechten Schirm (66) bedeckt wird, der mit den anderen identisch ist, aber keine Öffnung besitzt und/oder durch mindestens eine senkrechte Isolierleiste (88), die sich in Querrichtung zwischen den beiden Ständern erstreckt und deren Höhe gleich dem ersten vorbestimmten Abstand ist, wobei der oder jeder zusätzliche Schirm durch Einrasten auf den Ständern befestigt wird, und dass die oder jede Leiste eine rechteckige Platte (89) aufweist, die an einer ihrer Längskanten mit einer Einfanglasche (93) versehen ist und an ihrer anderen Längskante eine Rinne (91), deren Form der Form der Lasche entspricht, wobei besagte Lasche (93) entweder in eine entsprechende in einem Schirm vorgesehene Rinne (79) eingreift oder aber in eine entsprechende Rinne (91) einer anderen Leiste.

21. Gehäuse nach den Ansprüchen 13 und 20, dadurch gekennzeichnet, dass die Einfanglasche (93) und die Rinne (91) der oder jeder Leiste sich über die gesamte Länge der Platte erstrecken und dass die beiden Längsträger (70) des Schirms oder jedes Schirms jeweils auf ihrer ganzen Länge mit der Rinne (79) zur Aufnahme der Lasche einer Leiste versehen sind.

22. Gehäuse nach einem der Ansprüche 20 und 21, dadurch gekennzeichnet, dass die Platte (89) der oder jeder mit der Einfanglasche (93) und der Rinne (91) versehenen Leiste aus Plastikmaterial geformt ist.

23. Gehäuse nach einem der Ansprüche 20 bis 22, dadurch gekennzeichnet, dass mindestens eine Leiste (88) als Zwischenstück zwischen zwei jeweils mit einer Öffnung versehenen Schirmen (66) dienen kann, wenn der vorgegebene Abstand der Trägerschienen für die Geräte um einen Betrag erhöht wird, der mindestens gleich einmal dem ersten vorbestimmten Abstand (p) ist.

FIG.1

# FIG. 2

# FIG. 3

# FIG. 8

FIG.4

FIG.5

FIG.6

FIG.7

FIG.9

EP 0 237 410 B1